# EUROPÄISCHE PATENTSCHRIFT

(11) **EP 0 963 134 B1**
(45) Veröffentlichungstag und Bekanntmachung des Hinweises auf die Patenterteilung: **23.01.2008**
(21) Anmeldenummer: 99109111.7
(22) Anmeldetag: 07.05.1999
(51) Int. Cl.: H04Q 11/04

(54) **Verfahren zur Übertragung von Nutzdaten in einem Dienste integrierenden digitalen Netz (ISDN)**
Method for transmission of user data in an integrated services digital network (ISDN)
Méthode de transmission de données utilisateur dans un réseau numérique à intégration de services (RNIS)

(30) Priorität: 05.06.1998 DE 19825144
(43) Veröffentlichungstag der Anmeldung: 08.12.1999
(73) Patentinhaber: Deutsche Telekom AG, 53113 Bonn (DE)
(72) Erfinder: Hertzel, Silvio Dipl.-Ing., 53639 Königswinter (DE); Wagner, Robert Dipl.-Ing., 53343 Wachtberg (DE); Perini, Roland Dipl.-Ing., 53424 Remagen (DE)

(56) Entgegenhaltungen:
- US-A- 4 698 801
- "FINAL DRAFT prETS 300 284: Integrated Services Digital Network (ISDN); User-to-User Signalling (UUS) supplementary service Service description" ETSI STANDARDS, EUROPEAN TELECOMMUNICATIONS STANDARDS INSTITUTE, SOPHIA-ANTIPO, FR, Bd. NA-1, Dezember 1995 (1995-12), XP014012527
- MORITA K: "DEVELOPMENT OF ISDN SERVICES" NTT REVIEW, TELECOMMUNICATIONS ASSOCIATION, TOKYO, JP, Bd. 10, Nr. 2, März 1998 (1998-03), Seiten 14-19, XP000740446 ISSN: 0915-2334

## Beschreibung

Die Erfindung betrifft ein Verfahren zur Übertragung von Nutzdaten in einem Dienste integrierenden Netz (ISDN) nach dem Oberbegriff des Anspruchs 1.

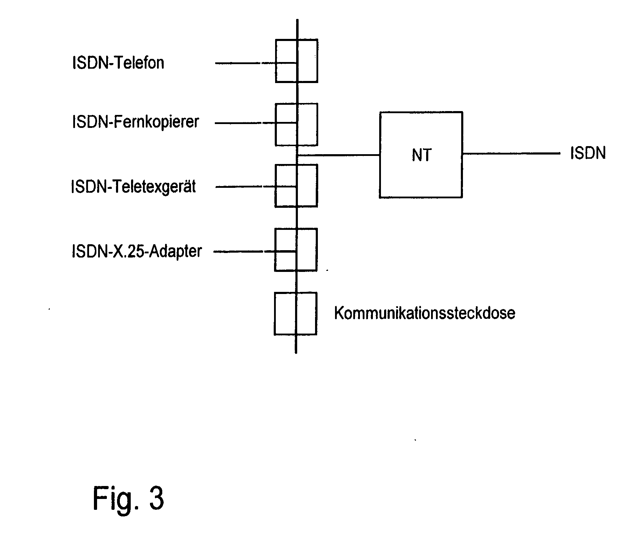

ISDN (Integrated Services Digital Network) steht für die Zusammenfassung der Fernmeldedienste in einem digitalen Netz. Fernmelde-bzw. Telekommunikationsdienste sind beispielsweise Fernsprechen (Telefon), Bild-Telefon, Fernkopieren (Telefax), Fernschreiben (Telex oder Teletext), Datenübertragung (z.B. für Computernetze), Fernwirken und - messen (Temex) oder dergleichen, vgl. auch Fig. 3.

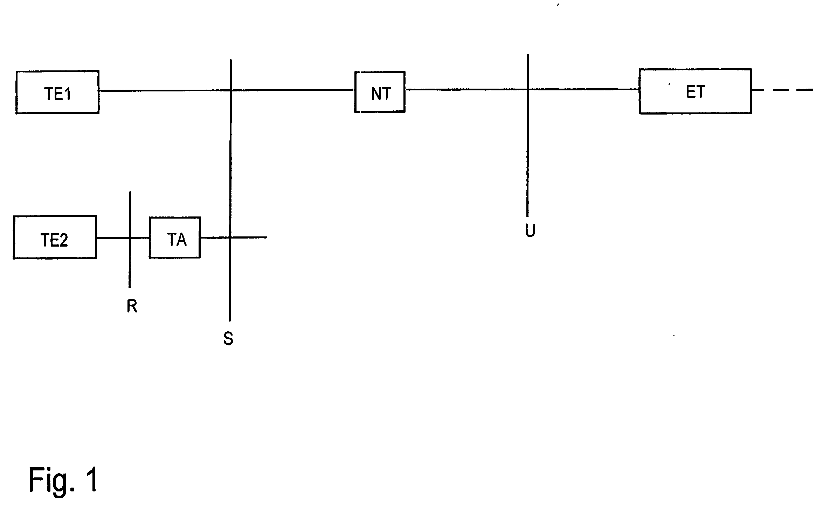

Zur funktionalen Abgrenzung der in einem ISDN-Teilnehmersystem erforderlichen Funktionseinheiten wurden für die Informationsübertragung, zu der auch Signalisierungsinformation gehört, sowohl diese Funktionseinheiten, als auch Bezugspunkte definiert, welch letztere die Funktionseinheiten voneinander trennen. Die Bezugspunkte (z.B. R,S,U; Fig.1) können durch reale Schnittstellen dargestellt werden.

Die ISDN-Struktur verfügt beispielsweise über Funktionseinheiten, wie sie in Fig. 1 dargestellt sind. Es handelt sich hier um eine Konfiguration, die in der Realität auch über weniger oder mehr Funktionseinheiten verfügen kann.
Die Funktionseinheiten dienen verschiedenen Aufgaben:

Die Vermittlungsstelle ET nimmt die Vermittlungsfunktion wahr und führt insbesondere die Teilnehmer-Netz-Zeichengabe auf der Netzseite durch. Ein Leitungsabschluß bildet auf der Netzseite den übertragungstechnischen Abschluß der Strecke von der Vermittlungsstelle zu dem Teilnehmerabschluß und ist hier, weil er als ein Teil der Vermittlungsstelle betrachtet ist, nicht besonders dargestellt.

Der Netzabschluß NT stellt den übertragungstechnischen Abschluß der Strecke von der Vermittlungsstelle zum Teilnehmeranschluß auf der Teilnehmerseite dar. Er kann von dem Netzbetreiber für spezielle Funktionen eingestellt und gesteuert werden, beispielsweise zu Testzwecken, und isoliert den Endsystemanschluß ET von der Übertragungseinrichtung auf der Teilnehmeranschlußleitung.

Das Endsystem vom Typ 1 TE1 entspricht der ISDN-Schnittstellendefinition und kann direkt an einen NT angeschlossen werden. Die anschließbaren Endsysteme sind Rechner und/oder die in Fig. 3 dargestellten Gerätevarianten.

Das Endsystem vom Typ 2 TE2 ist ein konventionelles Endgerät mit einer Schnittstelle für ein bestehendes (analoges) Fernmeldenetz mit a/b-Schnittstelle für beispielsweise ein konventionelles Telefon oder Telefaxgerät. Für deren Betrieb am ISDN wird allerdings ein Endsystemadapter TA benötigt, der die Endgeräte-Schnittstelle mit der ISDN-Schnittstelle koppelt.

Von den Bezugspunkten befindet sich U zwischen einem in der Vermittlungsstelle ET integrierten Leitungsabschluß und dem Netzabschluß NT, S zwischen Netzabschluß NT und Endsystem TE1 und R zwischen TA und TE2. Für den Bezugspunkt U gibt es national genormte Schnittstellen, und an S wird die universelle Kommunikationssteckdose IAE, TAE angeschlossen. Die Schnittstellen an R sind durch die angeschlossenen Endgeräte vorgegeben.

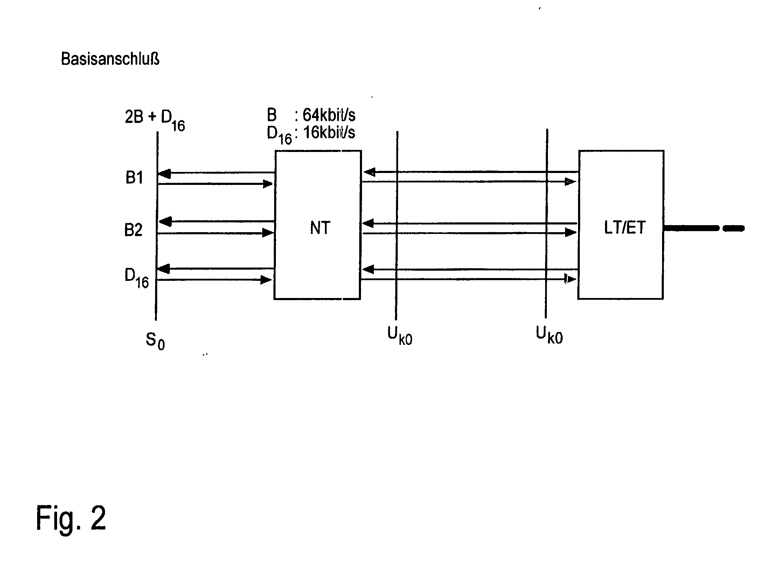

Die für die Übertragung von Sprache und Daten, sowie von Signalisierungszeichen erforderlichen Kanäle sind in der Schnittstellennorm für den Bezugspunkt S des Beispiels nach Fig. 1 beschrieben. Darin wird ein Basisanschluß S₀ mit zwei Nutzkanälen B1,B2 (je 64kb/s) und ein Signal-oder Zeichengabe-Kanal D (16kb/s), sowie ein Primärmultiplexanschluß definiert, auf welch letzteren in dieser Beschreibung nicht weiter eingegangen wird. Die Fig. 2 zeigt ein Beispiel eines Basisanschlusses am S₀-Bus, der über seinen Netzabschluß NT und eine Schnittstelle Uₖ mit der Vermittlungsstelle ET und deren integriertem Leitungsabschluß LT verbunden ist.

Die Übertragung von Information im Rahmen dieser Dienste umfaßt einmal die Übertragung von Nutzdaten, wie beispielsweise die reinen Sprachsignale beim Telefonieren sowie Daten und zum anderen die Übertragung von Signaldaten für die Leitweglenkung eines Anrufs von Anrufer zum Angerufenen, also den Verbindungsaufbau, für das Abbrechen von bestehenden Verbindungen, die Angabe von Zuständen der Übertragungsleitungen und -einrichtungen sowie von Steuersignalen für die Prüfung der Übertragungsleitungen und -einrichtungen und daraus ggf. resultierender Fehlersignale, beispielsweise für eine Fehlerferndiagnose und Fehlerbeseitigung sowie für eine Reihe hier nicht aufgeführter Steuerfunktionen, auch solcher, welche aus der Art der verschiedenen Dienste resultieren.

In ISDN-Systemen steht, wie bereits oben erwähnt, für die Übertragung der o.g. Information zwischen dem Endsystem TE eines Teilnehmers und seiner Vermittlungstelle ET eine genormte Schnittstelle, der S₀-Bus, zur Verfügung, der zwischen dem Endsystem, einem Netzabschluß NT und der Vermittlungsstelle verläuft.

Dieser S₀-Bus besteht also, wie oben schon dargelegt, aus zwei Kanälen B1 und B2 für die Vollduplex-Übertragung der Nutzdaten mit jeweils einer maximalen Transferrate von 64 kb/s und einem D-Kanal für die Vollduplex-Übertragung von Signalinformation mit einer maximalen Transferrate von 16 kb/s. Die Übertragung erfolgt digital mittels Verwendung eines modifizierten AMI-Codes (Alternate Mark Inversion Code), eines pseudoternären Codes oder eines anderen geeigneten Codes. Beim erstgenannten Code werden zwei binäre Zustände mit drei Potentialen dargestellt. Folgen von binären Nullen werden wechselnde Polaritäten zugeordnet. Eine binäre Eins wird durch den Signalwert 0 Volt dargestellt. Damit Übertragungsfehler feststellbar sind, dürfen niemals zwei Symbole gleicher Polarität, z.B. ++ oder -- aufeinanderfolgen (außer beim Rahmenbit). Dieser D-Kanal ist allerdings nicht voll ausgelastet und hat noch Übertragungskapazität frei.

Das vorstehend beschriebene Übertragungskonzept hat jedoch einen entscheidenden Nachteil dann, wenn eine Nutzdatenübertragung mit höherer Zuverlässigkeit und höherer Zugangsqualität für Anwendungen gefordert wird, die eine höhere Verfügbarkeit benötigen. Sind nämlich die beiden B-Kanäle besetzt oder gestört, ist bei herkömmlichen ISDN-Systemen eine Nutzdatenübertragung nicht mehr möglich.

Im allgemeinen wird häufiger der Fall eintreten, daß ein ISDN-Endsystem nicht zugänglich ist, weil bei einem ISDN-Basisanschluß beide B-Kanäle belegt sind, als weil sie gestört sind. Höhere Verfügbarkeit ist vor allem für Not-, Rettungs- und Hilfsdienste wichtig, da die Notanrufe möglichst sicher übertragen werden müssen. Andererseits ist es auch erforderlich, daß wichtige Daten, z.B. bei Fernwirk- oder Fernsteuerfunktionen unterbrechungsfrei übertragen werden können.

Die Europäische NOrm "FINAL DRAFT prE.TS 300 284: Integrated Services Digital Network (ISDN). User-to-User Signalling (UUS) supplementary Service Service description; ETSI Standards, European Telecommunications Standards Institute, SOPHIA-ANT.IPO, FR, Bd. NA-1, vom Dezember 1995 offenbart einen "supplemantary Services", wonach eine begrenzte Anzahl von Informationen über den Signalisierungskanal zwischen den Anwendern übertragen werden können.

Das US Patent 4 698 801 offenbart ein System zur digitalen Datenübertragung. Das System umfasst Übertragungskanäle mit einer hohen Bitübertragungsrate und Kanäle für eine niedrigere Bitübertragungsrate. Insbesondere das LSDN-System mitzwei B-Kanälen und einem D-Kanal ist offenbart, Der Kanal mit niedriger Bitrate, insbesondere der D-Kanal des ISDN-Netzes, ist nicht nur dazu vorgesehen Steuersignale zu übertragen, sondern soll.auch zur Übertragung von Datensignalen genutzt werden. Eine Paketvermittlung ist auf dem D-Kanal des ISDN-Netzes vorgesehen.

Die Nutzung des D-Kanals erhöht zwar die verfügbare Bandbreite zur Übertragung von Nutzdaten. Jeder Einsatz eines paketvermittelten Dienstes auf dem D-Kanal erfordert jedoch umfangreiche Modifikationen, denn es bedarf weiterer Maßnahmen, um das über den D-Kanal übertragene paketbasierte Protokoll weiterzuverarbeiten.

Es daher Aufgabe der vorliegenden Erfindung, ein Verfahren zur Übertragung von Nutzdaten in einem Dienste integrierenden digitalen Netz (ISDN) bereitzustellen, welches auf preiswerte und zuverlässige Weise die Nutzdatenübertragung bei höherer Verfügbarkeit gewährleistet. Die Aufgabe wir durch den Gegenstand des beigefügten Anspruchs 1 gelöst.

Es ist ferner eine Aufgabe der Erfindung eine Nutzdatenübertragung auch dann noch zu ermöglichten, wenn beide Nutzdatenkanäle B1 und B2 besetzt sind oder wenn Sprachübertragungen zu ermäßigten Tarifen, Telefonbuchauskünfte oder Datenbankabfragen mit geringer Datenmenge oder Verbindungen zu Funkrufdiensten erfolgen sollen.

Die Lösung dieses Problems ist ein Verfahren zur Übertragung von Nutzdaten in einem Dienste integrierenden digitalen Netz ISDN zwischen einem Netzabschluß NT und einem Vermittlungsstellenabschluß ET über einen S₀-Bus, bestehend aus zwei Basiskanälen B1,B2 für die Nutzdatenübertragung und einem D-Kanal für die Übertragung von Signalisierungszeichen, das dadurch gekennzeichnet ist, daß für die Übertragung von Nutzdaten geringerer Bandbreite eine Umschaltung U vorgenommen wird, durch die eine im Netzabschluß NT vorgesehene erste Einheit E1 aktiviert wird, die einen Nutzdatenstrom NDS geringerer Bandbreite aus einer Nutzdatenschnittstelle NDSCH in Senderichtung in den D-Kanal multiplext und in Empfangsrichtung den Nutzdatenstrom geringerer Bandbreite aus dem D-Kanal in die Nutzdatenschnittstelle demultiplext und ferner eine in dem Vermittlungsstellenabschluß ET vorgesehene zweite Einheit E2 aktiviert wird, die aus dem Informationsstrom im D-Kanal die Signalisierungszeichen herausfiltert und dem Signalisierungsnetz SN zuführt, sowie die im Informationsstrom noch vorhandenen Nutzdaten geringerer Bandbreite des Teilnehmers mit einer Kennung KE versieht und, auf eine bestimmte höhere Bandbreite konvertiert und über einen Kanal dieser bestimmtern höherern Bandbreite zur Ziel-Vermittlungsstelle überträgt. Zum Einschleifen der Nutzdaten auf den D-Kanal zwischen die Signalisierungszeichen, für deren Übertragung, Synchronisierung und Identifizierung zwischen Sende- und Empfangsseite, sind den Nutzdaten und den Signalisierungszeichen nach einem Zeitmultiplex-Verfahren **Zeitscheiben fester oder variabler Länge zugeteilt, deren Längen den jeweiligen Erfordernissen angepaßt sind.**

Eine Ausgestaltung dieses Verfahrens besteht darin, daß für Sprache als Nutzdaten im Endgeräteabschluß ET ein Telefon F an die erste Einheit E1 im Netzabschluß NT angeschlossen ist, in der die Sprachsignale für eine Übertragung über den D-Kanal umgewandelt werden, wobei die erste Einheit hierzu in Senderichtung eine Analog-/Digitalwandlung ADN mit nachfolgender Sprachkompression KOMP und in Empfangsrichtung eine Sprachdekompression (-Dehnung) DKOMP mit nachfolgender Digital-/Analogwandlung DAW durchführt.

Die Nutzdaten werden in einem Zwischenspeicher FIFO zwischengespeichert, der jeweils so gesteuert wird, daß die Signalisierungszeichen das Auslesen der Nutzdaten für die Übertragung auf den D-Kanal sperren, so daß die Signalisierungszeichen über den D-Kanal übertragen werden und nach deren Übertragung das weitere Auslesen der Nutzdaten und deren Übertragung über den D-Kanal wieder auslösen, wobei der Anfang einer jeweiligen Nutzdatenübertragung durch ein besonderes Kennungszeichen KE zur Unterscheidung zwischen Nutzdaten und Signalisierungszeichen ergänzt sind.

Die Kapazität des Zwischenspeichers FIFO ist den jeweiligen Erfordernissen angepaßt, und das Einspeichern und Auslesen orientiert sich außerdem an den Kriterien seines Füllungsgrades.

Die Umschaltung auf den B-Kanal-,D-Kanal- oder gemischten B-/D-Kanalbetrieb erfolgt mittels Voreinstellung nach Maßgabe des Teilnehmers oder Netzbetreibers, wobei die Voreinstellungen eine Übertragung
* nur über den D-Kanal - ansonsten besetzt,
* nur über die B-Kanäle - ansonsten besetzt,
* vorzugsweise über den D-Kanal - ansonsten über die B-Kanäle oder
* vorzugsweise über die B-Kanäle - ansonsten über den D- Kanal
ermöglichen.

Es wird somit der Nachteil einer eingeschränkten Verfügbarkeit von Endsystemen, wenn beide B-Kanäle besetzt oder gestört sind, vermieden und der Vorteil erreicht, daß auch eine bessere Ausnutzung von ISDN-System-Resourcen ermöglicht wird, die auch dann von großem Vorteil ist, wenn man bei Anwendungen, die weniger Bandbreite benötigen, generell zunächst den D-Kanal zu Gunsten von Breitbandübertragungen auf den B-Kanälen benutzt. Dieses erhöht dann die Verfügbarkeit von B-Kanälen für die Übertragung von Nutzdaten höheren Bandbreite-Bedarfs.

Im folgenden wird die Erfindung an Hand der beiliegenden Zeichnungen näher erläutert. Es zeigen:
- Fig. 1: eine Prinzipdarstellung desjenigen Bereichs des ISDN-Systems vom Endabschluß über den Netzabschluß bis zum Vermittlungstellenabschluß, in dem die Erfindung liegt,
- Fig. 2: als Blockschaltbild eine Prinzipdarstellung eines bekannten ISDN-Basisanschlusses, bei dem erfindungsgemäß für eine weitere Nutzdatenübertragung der D-Kanal verwendet wird,
- Fig. 3: eine Prinzipdarstellung eines Beispiels einer S₀-Bus-Konfiguration,
- Fig. 4: ein Blockschaltbild des Teil des ISDN, in dem die für eine Nutzdatenübertragung über den D-Kanal vorgesehenen Modifizierungen innerhalb des Netzabschlusses NT und der Vermittlungsstelle ET dargestellt sind, und
- Fig. 5: eine Prinzipdarstellung einer möglichen Verfahrens zur Einschleusung des Nutzdatenstromes in den D-Kanal.

Die Nutzung des D-Kanals für die Übertragung anderer Information als zu Signalisierungszwecken ist bisher nicht vorgenommen worden. Da der D-Kanal aber nur zum Teil durch die Übertragung von Signalisierungsinformation ausgelastet ist, verfügt er über genügend Übertragungskapazität, um noch einen zusätzlichen Nutzkanal geringerer Bandbreite einzurichten.

Dazu ist es notwendig sowohl auf der Netzabschlußseite als auch auf der Vermittlungsstellenseite zusätzliche Vorsorge zu treffen, um die entsprechenden Verfahrensabläufe durchzuführen. Diese beziehen sich auf das Einschleusen, Synchronisieren und Identifizieren von Nutzdaten in den D-Kanal.

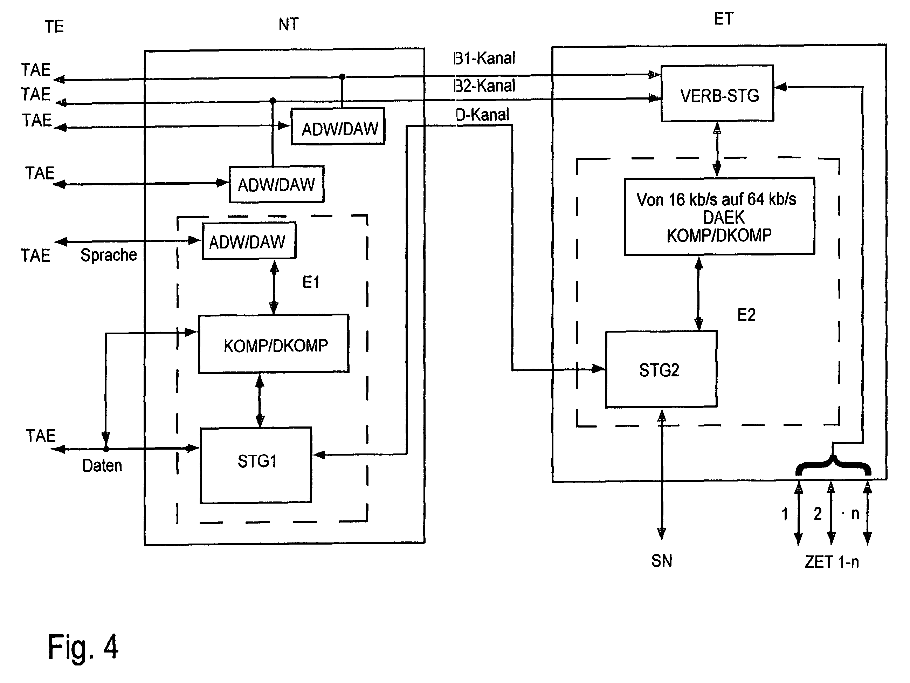

Fig. 4 gibt hierzu einen Überblick. Auf der Seite des Netzabschlusses NT wird in Senderichtung, also von NT nach ET, der Nutzdatenstrom NDST in einem geeigneten Interface E1 in den D-Kanal eingeschleust und in Empfangsrichtung, also von ET nach NT, wieder aus dem D-Kanal herausgefiltert. Soll Sprache als Nutzdaten über den D-Kanal übertragen werden, dann ist in Senderichtung zusätzlich eine Analog-/Digitalwandlung ADW und eine Sprachkompression KOMP und in Empfangsrichtung eine Sprachdekompression DKOMP und eine Digital-/Analogwandlung DAW durchzuführen.

Der Anschluß für die analogen Signale wird aus dem Netzabschluß NT auf eine Schnittstelle, z.B. TAE-Anschlußdose im Endgeräteabschluß TE herausgeführt. Die Signalisierungsdaten dieses Sprachkanals werden direkt und die komprimierten Sprachsignale, nachdem sie eine Kennung KE erhalten haben, in den Lücken zwischen den Signalisierungsdaten über den D-Kanal zur Vermittlungsstelle ET übertragen.

Die in der Schnittstelle E1 vorgesehene Ablaufsteuerung STG1 kann für das Einschleusen des Nutzdatenstroms NDST in den D-Kanal alternative Verfahren anwenden. Sie kann hierzu den Nutzdaten und den Signalisierungssignalen jeweils für deren Übertragung über den D-Kanal mittels eines Zeitmultiplex-Verfahrens Zeitscheiben fester oder variabler Länge zuteilen, je nach den Erfordernissen, die von der Anwendung des Teilnehmers abhängen.

Es kann auch anstelle eines Zeitmultiplex-Verfahrens mit einer Zwischenspeicherung der Nutzdaten nach dem bekannten FIFO-Algorithmus (first in/first out) verfahren werden, wobei die Signalisierungsdaten bei ihrem Erscheinen das Ausspeichern der Nutzdaten auf den D-Kanal sperren, um dann selbst über den D-Kanal übertragen zu werden. Damit die jeweilige Empfangsseite Signalisierungssignale von Nutzdaten unterscheiden kann, erhalten die Nutzdaten bei jeden neuen Ausspeichern aus beispielsweise einem FIFO-Speicher ein bestimmtes Codezeichen als Kennung KE vorangestellt, das optional auch noch durch ein Endecodezeichen am Ende eines Nutzdatenblockes ergänzt sein kann. Dieses erleichtert dem System die Datenarterkennung DAEK.

Auf der Seite der Vermittlungsstelle ET werden ebenfalls Vorkehrungen getroffen, um aus dem D-Kanal die Signalisierungssignale für die eingangs erwähnten Aufgaben, besonders diejenigen des Verbindungsaufbaus und der Leitwegsteuerung herauszufiltern und dem Signalisierungsnetz SN bereitzustellen. Hierzu ist die Steuerung STG2 vorgesehen, welche ein zur Herausfilterung umgekehrtes Verfahren anwendet, beispielsweise ein Zeitdemultiplex-Verfahren. Die Nutzdaten (des Teilnehmers, Endkunden) werden nach einer Datenarterkennung DAEK von ihrer Transferrate von 16kb/s auf 64 kb/s konvertiert und über einen 64kb/s-Kanal und über eine Verbindungssteuerung, beispielsweise ein Koppelfeld, zur Ziel-Vermittlungsstelle ZETi übertragen.

Die Zeitmultiplex-Verfahren, die feste Zeitscheiben für die Übertragung sowohl der Signalisierungssignale als auch der Nutzdaten zuteilen sind hinsichtlich des Datendurchsatzes wegen der nicht nutzbaren Lücken zwischen den Zeitscheiben noch nicht optimal.

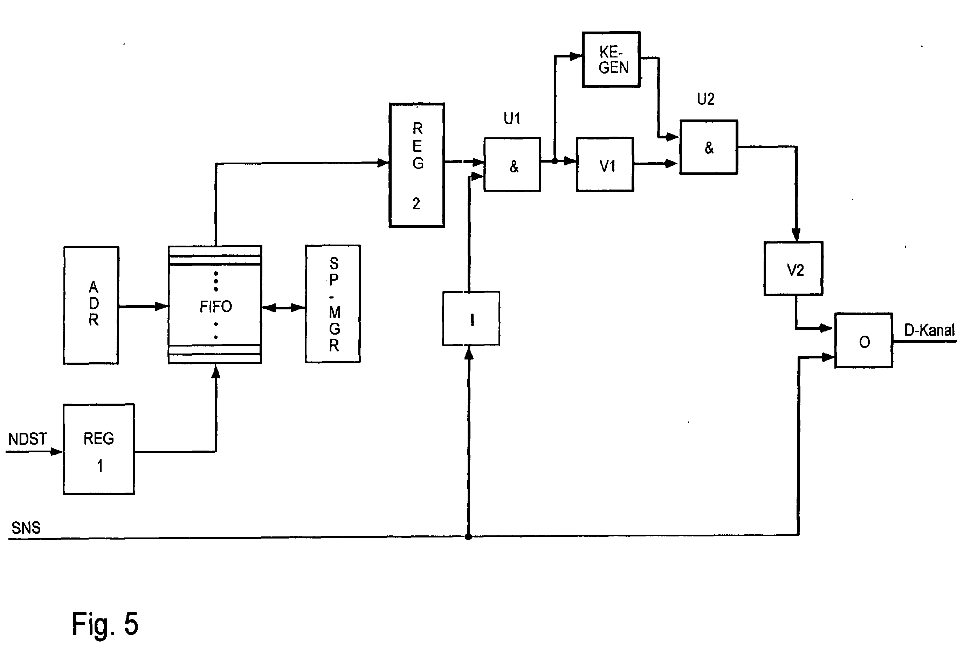

Hier kann ein Verfahren, das prinzipiell in Fig. 5 dargestellt ist, Verbesserungen mit sich bringen. Der Nutzdatenstrom NDST gelangt über ein Speichereingangsregister REG1 in einen Zwischenspeicher FIFO (first in/first out), der über eine Adress-Steuerung ADR und ein Speichermanagement SP-MGR verfügt. Die zwischengespeicherten Nutzdaten ND werden, je nach Organisation der Daten, byte-, wort- oder blockweise in ein Speicherausgangsregister REG2 ausgelesen. Die Signalisierungssignale SNS sperren über einen Inverter I und eine UND-Torschaltung U1 den vom Speicherausgangsregister kommenden Nutzdatenstrom. Wenn keine Signalisierungsdaten anliegen, ist die UND-Torschaltung U1 geöffnet, und die Nutzdaten gelangen zu einem Kennungs-Generator KE-GEN, der ein Kennsignal KE den jeweiligen Nutzdatengruppen voranstellt, weil diese in einer Verzögerungsschaltung V1 für die Dauer des Kennsignals verzögert wird. Über eine weitere UND-Torschaltung U2 werden dann die Nutzdaten plus Kennsignal über eine weitere Verzögerungsschaltung V2 zu einer ODER-Torschaltung O übertragen, welche die Kopplung der Signalisierungssignale und der Nutzsignale auf den D-Kanal herstellt. Die Verzögerung V2 bildet eine zeitliche Trennung zwischen den Signalisierungssignalen und den Nutzsignalen, die zusammen mit der Kennung KE, eine Unterscheidung beider Signalarten in der Datenarterkennung DAEK (Fig. 4) ermöglicht.

Ob nun Daten oder Sprache über die B-Kanäle oder den D-Kanal übertragen werden sollen kann vorgegeben werden, oder sich aus dem Belegungs- oder Fehlerzustand der Kanäle ergeben. Eine Voreinstellung des gewünschten Kanals kann durch den Teilnehmer oder den Netzbetreiber vorgenommen werden.

Solche Voreinstellungen können sein:
- Übertragung: nur über den D-Kanal - ansonsten besetzt, nur über die B-Kanäle - ansonsten besetzt,
vorzugsweise über den D-Kanal - ansonsten über den B-Kanal oder
vorzugsweise über den B-Kanal - ansonsten über den D-Kanal.

Als Anwendungen kommen Verbindungen in Frage, die eine hohe Verfügbarkeit erfordern oder Sprachverbindungen zu ermäßigten Tarifen, Telefonbuchauskünfte, Datenbankabfragen mit geringer Datenmenge oder Verbindungen zu Funkrufdiensten.

## Patentansprüche

1. Verfahren zur Übertragung von Nutzdaten in einem Dienste integrierenden digitalen Netz ISDN zwischen einem Netzabschluß NT und einem Vermittlungsstellenabschluß ET über einen S₀-Bus, bestehend aus zwei Basiskanälen B1,B2 für die Nutzdatenübertragung und einem D-Kanal für die Übertragung von Signalisierungszeichen, wobei für die Übertragung von Nutzdaten geringerer Bandbreite eine Umschaltung vorgenommen wird, durch die
eine im Netzabschluß (NT) vorgesehene erste Einheit (E1) aktiviert wird, die einen Nutzdatenstrom (NDS) geringerer Bandbreite aus einer Nutzdatenschnittstelle **mit einer Kennung (KE) versieht** und in Senderichtung in den D-Kanal multiplext und in Empfangsrichtung den Nutzdatenstrom geringerer Bandbreite aus dem D-Kanal in die Nutzdatenschnittstelle demultiplext und ferner eine in dem Vermittlungsstellenabschluß (ET) vorgesehene zweite Einheit (E2) aktiviert, die aus dem Informationsstrom im D-Kanal die Signalisierungszeichen herausfiltert und dem Signalisierungsnetz (SN) zuführt, sowie die im Informationsstrom noch vorhandenen Nutzdaten geringerer Bandbreite des Teilnehmers **auf eine bestimmte höhere Bandbreite konvertiert** und über einen Kanal **dieser** bestimmter höheren Bandbreite zum Zielvermittlungsstellenabschluß (ZETi) überträgt
**dadurch gekennzeichnet, dass**
zum Einschleifen der Nutzdaten auf den D-Kanal zwischen die Signalisierungszeichen für deren Übertragung, Synchronisierung und Identifizierung zwischen Sende- und Empfangsseite, den Nutzdaten und den Signalisierungszeichen nach einem modifizierten Zeitmultiplex-Verfahren Zeitscheiben **fester oder** variabler Länge zugeteilt werden, deren Längen den jeweiligen Erfordernissen anpaßbar sind.

2. Verfahren nach Anspruch 1, **dadurch gekennzeichnet, daß** für Sprache als Nutzdaten im Endgeräteabschluß (ET) ein Telefon (F) an die erste Einheit (E1) in Netzabschluß (NT) angeschlossen ist, in der die Sprachsignale für eine Übertragung über den D-Kanal umgewandelt werden, wobei die erste Einheit (E1) hierzu in Senderichtung eine Analog-/Digitalwandlung ADW mit nachfolgender Sprachkompression KOMP und in Empfangsrichtung eine Sprachdekompressiom (-Dehnung) DKOMP mit nachfolgender Digital-/Analogwandlung DAW durchführt.

3. Verfahren nach Anspruch 1, **dadurch gekennzeichnet, daß** die Nutzdaten in einem Zwischenspeicher (FIFO) zwischengespeichert werden, der jeweils so gesteuert wird, daß die Signalisierungszeichen das Auslesen der Nutzdaten für die Übertragung auf den D-Kanal sperren, so daß die Signalisierungszeichen über den D-Kanal übertragen werden und nach deren Übertragung das weitere Auslesen der Nutzdaten und deren Übertragung über den D-Kanal wieder auslösen, wobei der Anfang einer jeweiligen Nutzdatenübertragung durch ein besonderes Kennungszeichen (KE) zur Unterscheidung zwischen Nutzdaten und Signalisierungszeichen ergänzt sind.

4. Verfahren nach Anspruch 3, **dadurch gekennzeichnet, daß** die Kapazität des Zwischenspeichers (FIFO) den jeweiligen Erfordernissen angepaßt ist und das Speichermanagement (SP-MGR) das Einspeichern und Auslesen des Zwischenspeichers außerdem nach den Kriterien des Speicher-Füllungsgrades vornimmt.

5. Verfahren nach einem oder mehreren der vorhergehenden Patentansprüche, **dadurch gekennzeichnet, daß** die Umschaltung auf D-Kanalbetrieb mittels Voreinstellungen nach Maßgabe des Teilnehmers oder des Netzbetreibers erfolgt, wobei die Voreinstellungen eine Übertragung * nur über den D-Kanal - ansonsten besetzt, * nur über die B-Kanäle - ansonsten besetzt, * vorzugsweise über den D-Kanal - ansonsten über die B-Kanäle oder * vorzugsweise über die B-Kanäle - ansonsten über den D-Kanal bewirkt.

## Claims

1. Method for transferring user data, in a digital ISDN network that integrates services, between a network termination NT and an exchange termination ET through an So bus, consisting of two basic channels B1, B2 for user data transmission and a D channel for transmission of signaling characters, wherein switching is performed for the transmission of user data having relatively low bandwidth, by means of which a first unit (E1) provided in the network termination (NT) is activated, which first unit (E1) provides a user data stream (NDS) having relatively low bandwidth from a user data interface with an identifier (KE) and multiplexes it in the D channel in the transmit direction, and in the receive direction demultiplexes the user data stream having relatively low bandwidth from the D channel into the user data interface, and also activates a second unit (E2) provided in the exchange termination (ET) that filters the signaling characters out of the information stream in the D channel and delivers them to the signaling network (SN) and that also converts the subscriber's lower-bandwidth user data remaining in the information stream to a specific higher bandwidth and transmits it to the destination exchange termination (ZETi) through a channel having this specific higher bandwidth, **characterized in that**, in order to insert the user data in the D channel between the signaling characters for transmission, synchronization, and identification between the transmitting and receiving sides, the user data and signaling characters are assigned time slices of fixed or variable length according to a modified time-division-multiplexing method, where the lengths of said time slices can be matched to the applicable requirements.

2. Method according to claim 1, **characterized in that**, when the user data in the terminal device termination (ET) is voice, a telephone (F) is connected to the first unit (E1) in the network termination, in which first unit the voice signals are converted for transmission through the D channel, wherein for this purpose the first unit (E1) performs an analog-to-digital conversion ADW followed by speech compression KOMP in the transmit direction and performs a speech decompression (expansion) DKOMP followed by digital-to-analog conversion DAW in the receive direction.

3. Method according to claim 1, **characterized in that** the user data are temporarily stored in a buffer (FIFO) that is controlled in each case such that the signaling characters block readout of the user data for transmission on the D channel, so that the signaling characters are transmitted on the D channel and, after their transmission, trigger the further readout of the user data and the transmission thereof on the D channel, wherein the start of each individual user data transmission is supplemented by a special identifier character (KE) to distinguish between user data and signaling characters.

4. Method according to claim 3, **characterized in that** the capacity of the buffer (FIFO) is matched to the applicable requirements and the buffer manager (SP-MGR) otherwise carries out the storage and readout of the buffer according to the criteria of the memory fill level.

5. Method according to one or more of the preceding claims, **characterized in that** the switchover to D channel operation takes place by means of presets specified by the subscriber or the network operator, wherein the presets cause transmission * only on the D channel - otherwise busy, * only on the B channels - otherwise busy, * preferably on the D channel - otherwise on the B channels, or * preferably on the B channels - otherwise on the D channel.

## Revendications

1. Procédé de transmission de données utiles dans un réseau numérique à intégration de services RNIS entre une terminaison de réseau NT et une terminaison de commutateur ET par l'intermédiaire d'un bus S₀, composé de deux canaux de base B1, B2 pour la transmission de données utiles et d'un canal D pour la transmission de caractères de signalisation, une commutation étant réalisée pour la transmission de données utiles de bande passante moins large, entraînant
l'activation d'une première unité (E1) prévue dans la terminaison de réseau (NT) qui affecte un identifiant (KE) à un flux de données utiles (NDS) de bande passante moins large provenant d'une interface de données utiles et qui, dans le sens de l'émission, multiplexe ledit flux vers le canal D et qui, dans le sens de la réception, démultiplexe le flux de données utiles de bande passante moins large provenant du canal D vers l'interface de données utiles, ainsi que d'une seconde unité (E2) prévue dans la terminaison de commutateur (ET) qui filtre le flux d'informations dans le canal D pour récupérer les caractères de signalisation et les appliquer au réseau de signalisation (SN), et qui convertit les données utiles de bande passante moins large de l'abonné toujours présentes dans le flux d'informations en une bande passante plus large donnée et les transmet à la terminaison de commutateur cible (ZETi) par l'intermédiaire d'un canal de cette bande passante plus large donnée, **caractérisé en ce que**,
pour intercaler les données utiles sur le canal D entre les caractères de signalisation en vue de leur transmission, synchronisation et identification entre le côté émission et le côté réception, des créneaux temporels de longueur fixe ou variable sont affectés aux données utiles et aux caractères de signalisation selon un procédé modifié de multiplexage temporel, dont les longueurs sont adaptables aux exigences respectives.

2. Procédé selon la revendication 1, **caractérisé en ce que** pour la langue comme données utiles dans la terminaison de terminal (ET), un téléphone (F) est connecté à la première unité (E1) dans la terminaison de réseau (NT), dans laquelle les signaux vocaux sont convertis pour une transmission par l'intermédiaire du canal D, la première unité (E1) effectuant à cet effet une conversion analogique/numérique ADW dans le sens de l'émission suivie d'une compression vocale KOMP et une décompression (extension) vocale DKOMP dans le sens de la réception suivie d'une conversion numérique/analogique DAW.

3. Procédé selon la revendication 1, **caractérisé en ce que** les données utiles sont provisoirement stockées dans une mémoire tampon (FIFO) qui est commandée de manière que les caractères de signalisation bloquent la lecture des données utiles pour la transmission sur le canal D, de façon que les caractères de signalisation soient transmis par l'intermédiaire du canal D et ré-déclenchent, une fois transmis, la lecture des données utiles et leur transmission par l'intermédiaire du canal D, un identifiant (KE) particulier venant respectivement compléter le début d'une transmission de données utiles pour distinguer les données utiles des caractères de signalisation.

4. Procédé selon la revendication 3, **caractérisé en ce que** la capacité de la mémoire tampon (FIFO) est adaptée aux exigences respectives et **en ce que** la gestion de la mémoire (SP-MGR) effectue l'écriture et la lecture de la mémoire tampon selon les critères du degré de remplissage de la mémoire.

5. Procédé selon l'une ou plusieurs des revendications précédentes, **caractérisé en ce que** la commutation en mode canal D s'effectue au moyen de préréglages en fonction de l'abonné ou de l'opérateur de réseau, les préréglages ayant pour effet une transmission * seulement par le canal D - sinon occupé, * seulement par les canaux B - sinon occupé, * de préférence par le canal D - sinon par les canaux B ou * de préférence par les canaux B - sinon par le canal D.
